(19) Europäisches Patentamt
European Patent Office
Office européen des brevets

(11) EP 4 239 587 B1

(12) # EUROPEAN PATENT SPECIFICATION

(45) Date of publication and mention of the grant of the patent:
**03.09.2025 Bulletin 2025/36**

(21) Application number: **23156413.9**

(22) Date of filing: **13.02.2023**

(51) International Patent Classification (IPC):
***G06V 10/44*** *(2022.01)* ***G06V 20/17*** *(2022.01)*
***G06V 20/10*** *(2022.01)* ***G08G 5/21*** *(2025.01)*
***G08G 5/54*** *(2025.01)* ***G05D 1/00*** *(2024.01)*

(52) Cooperative Patent Classification (CPC):
**G06V 20/17; G05D 1/0676; G06V 10/443; G06V 20/182; G08G 5/21; G08G 5/54;** G08G 5/55; G08G 5/57

(54) **ADAPTIVE FEATURE EXTRACTION TO DETECT LETTERS AND EDGES ON VEHICLE LANDING SURFACES**

ADAPTIVE MERKMALSEXTRAKTION ZUR ERKENNUNG VON BUCHSTABEN UND KANTEN AUF FAHRZEUGLANDEFLÄCHEN

EXTRACTION DE CARACTÉRISTIQUES ADAPTATIVE POUR DÉTECTER DES LETTRES ET DES BORDS SUR DES SURFACES D'ATTERRISSAGE DE VÉHICULE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **04.03.2022 IN 202211011854**
**21.04.2022 US 202217726007**

(43) Date of publication of application:
**06.09.2023 Bulletin 2023/36**

(73) Proprietor: **Honeywell International Inc.
Charlotte, NC 28202 (US)**

(72) Inventors:
- **GUPTA, Nikhil
Charlotte, 28202 (US)**
- **DAS, Shouvik
Charlotte, 28202 (US)**

(74) Representative: **Haseltine Lake Kempner LLP
Cheapside House
138 Cheapside
London EC2V 6BJ (GB)**

(56) References cited:
**US-A- 6 157 876**

- **ANGERMANN M ET AL: "High Precision Approaches Enabled by an Optical-Based Navigation System", PNT 2015 - PROCEEDINGS OF THE ION 2015 PACIFIC PNT MEETING, THE INSTITUTE OF NAVIGATION, 8551 RIXLEW LANE SUITE 360 MANASSAS, VA 20109, USA, 23 April 2015 (2015-04-23), pages 694 - 701, XP056017433**
- **JOHN CANNY: "A Computational Approach to Edge Detection", IEEE TRANSACTIONS ON PATTERN ANALYSIS AND MACHINE INTELLIGENCE, IEEE COMPUTER SOCIETY, USA, vol. 30, no. 6, 1 November 1986 (1986-11-01), pages 679 - 698, XP011242974, ISSN: 0162-8828**
- **LI JIAN ET AL: "Efficient Filtering for Edge Extraction under Perspective Effect", APPLIED SCIENCES, vol. 11, no. 18, 15 September 2021 (2021-09-15), pages 8558, XP093055015, DOI: 10.3390/app11188558**
- **ABU-JBARA KHALED ET AL: "A robust vision-based runway detection and tracking algorithm for automatic UAV landing", 2015 INTERNATIONAL CONFERENCE ON UNMANNED AIRCRAFT SYSTEMS (ICUAS), IEEE, 9 June 2015 (2015-06-09), pages 1148 - 1157, XP033171616, DOI: 10.1109/ICUAS.2015.7152407**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 239 587 B1

## Description

### BACKGROUND

Aviation is becoming more ubiquitous and the number of airports, heliports, and more recently vertiports, are on the rise. Regional aviation is becoming a more popular mode of transport, especially with upcoming electric airplanes. With these developments, there will be a rise in need for pilots, which would likely be fulfilled by younger and less experienced pilots. With such an ecosystem, aiding technologies for navigation like vision-based systems are going to be needed.

Vision augmented aircraft landing is a technology that can significantly reduce onboard equipment, both in terms of weight and cost. A camera and processing computer can replace multiple other sensors for landing such as a radio altimeter and an onboard instrument landing system (ILS) receiver. However, determining features of the landing location using techniques like edge detection to find an expected orientation and gradient of the landing markers can be a challenge when landing a vehicle in a target landing zone. These determinations can be hindered by a lot of false positives present alongside the required features. For example, detecting the edge of heliport markings is hindered significantly by the presence of similar angled lines around the landing pad. Likewise, detecting a runway edge is hindered by the presence of similar angled lines around the actual runway edges. These hinderances limit the usage of simple techniques for vision-based landing systems.

ANGERMANN M ET AL: "High Precision Approaches Enabled by an Optical-Based Navigation System", PNT 2015- PROCEEDINGS OF THE ION 2015 PACIFIC PNT MEETING, THE INSTITUTE OF NAVIGATION, USA, 23 April 2015 (2015-04-23), pages 694-701, discloses a vision-aided automatic landing system with an optical navigation computer, a laser scanner, a CMOS camera, an IR camera, a radar altimeter, air data sensors and a GNSS receiver operatively coupled to the computer. The main goal of the computer vision unit is to find the outer edges of the runway expressed in image coordinates. A Gaussian smoothing algorithm is used to remove noise effects, followed by the use of a Canny Edge Detector and a two-dimensional orientation mask is created by convolving a linear edge detection function aligned normal to the edge direction with a projection function parallel to the edge direction. LI JIAN ET AL: "Efficient Filtering for Edge Extraction under Perspective Effect", APPLIED SCIENCES, vol. 11, no. 18, 15 September 2021 (2021-09-15), page 8558, DOI: 10.3390/app111 88558 discloses automated lane marking detection in road vehicles.

### SUMMARY

According to the present invention, there is provided a vision-based landing system as set out in claim 1 below. Optional features of the invention are set out in the dependent claims below.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:

Figure 1A is a block diagram of a vision-based landing system that employs adaptive feature extraction to detect edges on vehicle landing surfaces, according to one embodiment;
Figure 1B is flow diagram of a method performed by an adaptive feature extraction module of the system of Figure 1A, according to an exemplary implementation;
Figure 2A is a schematic diagram of an aircraft runway, for which the system of Figure 1A can be employed to detect edges on the runway;
Figure 2B is a schematic diagram of a helipad, for which the system of Figure 1A can be used to detect markings on the helipad;
Figure 2C is a schematic diagram of a vertiport, for which the system of Figure 1A can be employed to detect markings on the vertiport;
Figure 3 is flow diagram of a method for adaptive feature extraction, according to another exemplary implementation;
Figure 4 is flow diagram of a method for adaptive feature extraction for use in landing a vehicle at a heliport, according to one example implementation;
Figure 5 is a schematic depiction of a heliport landing area, which includes a gradient convention of elements as used in the method of Figure 4;
Figure 6 is a flow diagram of an exemplary method of using image frame transforms to produce an estimated slope of an expected edge feature in the method of Figure 4;
Figures 7A-7C depict image results of a simulation using the method for adaptive feature extraction, in a vision assisted landing of a vehicle on a helipad; and

Figures 8A-8F depict image results of a simulation using the method for adaptive feature extraction, in a vision assisted landing of an aircraft on a runway.

## DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A system and method for adaptive feature extraction to detect letters and/or edges on vehicle landing surfaces is described herein. The present approach provides a way of extracting well defined structures and features from visual data, such as images of runway edges, helipad markings, landing pad markings, or the like. The visual data is captured using one or more onboard vehicle cameras.

The present method provides for estimating a vehicle pose relative to a plurality of known well-defined features on the ground. The present method reduces the number of detected candidates for a desired feature, and therefore increases integrity of the system by reducing the probability of a mismatch.

A significant challenge in doing vision-based pose estimation for an aerial vehicle is the accurate detection of corners and edges of a region of interest. Since these scenarios are used in well-defined conditions, such as well-marked runways and helipads, the present approach utilizes this information from a navigation database to improve detection of such edges. For example, a heliport landing area typically has clearly demarcated edges and threshold markings, with well-defined edge thicknesses and lengths.

In traditional edge detection methods, a conventional gradient filter is used to extract sharp gradients in an image. Gradient filters are usually unidirectional, which means one filter can only extract edges in a particular direction. Hence, multiple filters have to be applied to the same image over and over again, where each filter comprises a particular direction. This traditional approach does a good job of extracting all possible edges in the image, but fails at highlighting a desired edge from undesired edges, and needs multiple iterations of filters on the same image to yield the desired result. Therefore, additional filtering is required to extract required edges from a large set of candidates. The present approach provides such filtering and ensures that the well-defined knowledge of a region of interest is utilized effectively. In addition, using localization information from certified vehicle sensors and a navigation database makes it easier to prove the integrity of the system.

The present approach provides a visual navigational landing system for aerial vehicles, which includes a technique to adapt feature detection to any predefined shape or feature, such as aruco markers, runway edges, heliport markings, vertiport markings, or any other predefined landing markings. The present approach can be applied in the navigation of various aerial vehicles, including traditional fixed wing airplanes, helicopters, vertical take-off and landing (VTOL) vehicles such as hybrid VTOL vehicles, unmanned aerial vehicles (UAV), unmanned aircraft systems (UAS) vehicles for package delivery, air taxis such as urban air mobility (UAM) vehicles, or the like. The present approach does not require any ground augmentation apart from a distinct runway, strip, helipad, vertiport, or any other designated landing area, on which the aerial vehicle can land. The present method can be used in applications such as providing visual position estimates, sense and avoid, precision landing of aerial vehicles, aircraft visual docking at gates, and the like.

The present method uses other source of information such as a vehicle's coordinates and a navigation database to get an estimate of a desired edge's slope and length being detected. Moreover, the present method can detect letter marking edges, such as the "H" or "V" or any other known markings on any heliport or vertiport, for various vehicle landing applications.

The present approach provides richer information in the form of guidance and navigation cues that can be provided to a pilot. The present algorithm can also work in longer ranges (using zoom techniques), where visual acquisition by humans is not feasible.

In one example, the present method can enable a vision-based UAM landing from a height of about 50-60 m, without any extra equipment on the ground. In another example, the present method can be used for an aircraft glideslope and localizer deviation estimation at distances of around 3 nautical miles from a runway aiming point without the ILS equipment physically being present on the runway.

Further details related to the present system and method are described as follows and with reference to the drawings.

Figure 1A illustrates a vision-based landing system 100, according to one embodiment, which employs adaptive feature extraction to detect edges on vehicle landing surfaces. The vision-based landing system 100 comprises at least one vision sensor 110 such as a camera, located onboard a vehicle 102 such as an aircraft, and at least one processor 120 onboard vehicle 102. The processor 120 is operative to receive image data from vision sensor 110. The processor 120 is in operative communication with a data storage unit 130, which includes a navigation database 132 and a landing area database 134. In one embodiment, data storage unit 130 is located onboard vehicle 102. In other embodiments, information from navigation database 132 and landing area database 134 can be relayed to vehicle 102 via a communication link, such as when data storage unit 130 is located on the ground.

The processor 120 is also operatively coupled to one or more vehicle aiding sensors 140, which can include one or more inertial sensors such as an inertial measurement unit (IMU), a global navigation satellite system (GNSS) receiver such as a global positioning system (GPS) receiver, a light detection and ranging (LiDAR) device, a radio detection and ranging (RADAR) device, or the like. The processor 120 hosts an adaptive feature extraction module 122, which has processor readable instructions to perform a method to detect letters and edges on a landing surface for vehicle 102.

Figure 1B is flow diagram of the method performed by adaptive feature extraction module 122, according to an exemplary implementation. The method comprises capturing at least one image of a landing area for vehicle 102 using vision sensor 110, with the landing area including a plurality of edge features (block 150). The method also includes calculating an estimated slope of an expected edge feature of the landing area (block 152), and calculating an expected gradient direction of the expected edge feature (block 153). The method also includes selecting a horizontal basis kernel for an expected edge feature of the landing area, along an expected horizontal gradient (block 154), and selecting a vertical basis kernel for an expected edge feature of the landing area, along an expected vertical gradient (block 155). The method calculates a combined convolution kernel for the expected edge feature, based on the horizontal and vertical basis kernels, the estimated slope of the expected edge feature, and the expected gradient direction of the expected edge feature (block 156). The method then performs a convolution operation on the captured image using the combined convolution kernel to obtain a resulting edge feature image of the landing area (block 158).

Additional details related to implementing the adaptive feature extraction method are described hereafter.

The adaptive feature extraction method can be implemented as a computer vision algorithm in various applications to detect edges and/or letters on a vehicle landing surface. For example, Figure 2A is a schematic diagram of an aircraft runway 210, for which the adaptive feature extraction method such as used by vision-based landing system 100 (Fig. 1A), can be employed to detect edges on the aircraft runway 210. Figure 2B is a schematic diagram of a helipad 220, for which the adaptive feature extraction method such as used by vision-based landing system 100, can be used to detect markings on helipad 220 (e.g., the letter "H"). Figure 2C is a schematic diagram of a vertiport 230, for which the adaptive feature extraction method such as used by vision-based landing system 100, can be employed to detect markings on vertiport 230 (e.g., the letter "C").

Figure 3 is flow diagram of a method 300 for adaptive feature extraction, according to an exemplary implementation. The method 300 captures an original image of a landing area with a vehicle camera (block 310). Various features in the landing area can be detected with the camera, such as certain objects or markers, using edges, color profiles, heat maps (for infrared images), shapes and patterns.

The method 300 uses information from a navigation database 320, which provides information about a vehicle landing area of interest such as a heliport or runway, including a position, orientation, dimensions, and marking features of the landing area. For example, information about the landing area can include latitude, longitude, altitude (LLA). The method 300 also uses information from one or more vehicle sensors 322, which provide information about vehicle states, including the vehicle geodetic coordinates and the vehicle attitude such as from onboard inertial sensors. The information from navigation database 320 and vehicle sensors 322 is used to compute an estimated slope of an expected edge feature in the landing area (block 324). In addition, method 300 uses information from a landing area feature database 326, which provides information about various features in the landing area, such as a feature's coarse shape, color, gradient direction, and the like. The information from feature database 326 is used to compute an expected gradient direction of the expected edge feature (block 328).

The method 300 selects a horizontal kernel for the expected edge feature of the landing area (block 332), along an expected horizontal gradient. The method 300 also selects a vertical kernel for an expected edge feature of the landing area (block 334), along an expected vertical gradient. The method 300 obtains a kernel along the gradient of the expected edge feature (block 336) based on the horizontal and vertical kernels (from blocks 332 and 334), the estimated slope of the expected edge feature (from block 324), and the expected gradient direction of the expected edge feature (from block 328). The method 300 then calculates a combined convolution kernel adapted to the expected gradient of the edge feature (block 338).

The method 300 then performs a convolution operation (block 342) on the captured image (from block 310) using the combined convolution kernel (from block 338) to obtain a resulting edge feature image. After similar convolution operations of the entire image, a filtered image with edge features extracted is produced (block 344). The filtered image is then further processed to produce a final output for use by the vision navigation system of the vehicle.

Figure 4 is flow diagram of a method 400 for adaptive feature extraction for use in landing a vehicle at a heliport, according to one example implementation. The method 400 initially captures an original image 410 of the heliport landing area, such by a vehicle camera. As shown in image 410, a lower pixel intensity pavement is located near the heliport letter "H" feature at 412. A higher pixel intensity pavement is located on the heliport letter "H" feature at 414. A sharp gradient defines the edge of the heliport letter "H" feature at 416. Based on the heliport's information from a database, and a location of the vehicle, original image 410 is narrowed down to a region of interest (ROI) 418. An enlarged view of ROI 418, depicting pixels in a zoomed in section is shown in a digital image 420, which shows how an edge looks in a digital format. The "gradient" referred to here is the rate of change of pixel intensity while moving horizontally or vertically in an image. An edge is qualitatively defined by the sharp change in gradient.

The method 400 uses a few prerequisites from known sources, including information from a navigation database and vehicle sensors. The navigation database provides prior information about the heliport, including LLA of the landing area. The vehicle sensors provide information about the states of the vehicle, including the vehicle geodetic coordinates, and the vehicle attitude from onboard inertial sensors. This data is used to create a coarse prediction of the heliport, using projection geometry. The information from the navigation database and the vehicle sensors is used to compute an estimated slope of an expected edge feature. The information from a feature database is used to compute an expected gradient direction of the expected edge feature.

For example, edge features in a determined heliport trapezoid are computed from the known sources as indicated at 424, which represents the edges of the letter H" feature in the projected coarse ROI created. The errors in the projection are bounded by the errors in the navigation database and the states of the vehicle. Therefore, in the image frame, the coarse projected heliport is defined by a set of lines whose parameters like slope and y intercept can be computed.

As shown in Figure 4, the cosine of the edge's slope from 424 is calculated at 426, and the sine of the edge's slope from 424 is calculated at 428. These parameters are calculated using the following steps. Initially, the heliport geodetic coordinates and current vehicle geodetic coordinates are converted to Earth-Centered Earth-Fixed (ECEF) coordinates. The ECEF coordinates of the heliport are then converted to vehicle relative North-East-Down (NED) coordinates (navigation frame). Using the attitude of the vehicle from the onboard inertial sensors, the heliport coordinates are converted to a camera frame. With the known intrinsic matrix for the respective camera, the heliport coordinates are converted from the camera frame to an image frame in terms of pixels. Using the start and end pixels representing a letter edge in the image frame, the cosine and sine of the edge's slope is calculated, using the expression:

$$Edge\ Slope = \tan^{-1}\frac{(edge\ end\ Y - edge\ start\ Y)}{(edge\ end\ X - edge\ start\ X)} * \frac{180}{\pi}$$

In the cosine and sine of the edge's slope, an extra $\pi/2$ is added to correct for the direction of gradient convention.

The gradient convention of elements as used herein is shown in Figure 5, which is a schematic depiction of the heliport landing area. The angle of a selected edge is shown at 510, and the various arrows represent the direction of the gradient. The origin of the image coordinates (0, 0) for the X and Y directions is also shown.

Further details on a method of using image frame transforms to produce the estimated slope of an expected edge feature and an expected gradient direction are described below with respect to Figure 6.

Returning to Figure 4, a simple horizontal kernel is computed based on the cosine of the edge's slope from 426, and a simple vertical kernel is computed based on the sine of the edge's slope from 428. The simple horizontal and vertical kernels are used as basis kernels. An example matrix 432 for the simple horizontal kernel is shown in Figure 4. A positive horizontal gradient is defined from left to right in matrix 432, as represented by the increasing magnitude of values in matrix 432. An example matrix 434 for the simple vertical kernel is also depicted. A positive vertical gradient is defined from top to bottom in matrix 434, as represented by the increasing magnitude of values in matrix 434. The magnitude of values in matrix 432 and matrix 434 can be changed according to an expected gradient strength and the edge's dilution in pixels.

A matrix 436 is then obtained that represents a combined convolution kernel for the determined edge. The matrix 436 is obtained after respectively multiplying the cosine and sine values from 426 and 428 with the horizontal and vertical basis kernels represented by matrices 432 and 434. This can be expressed as:

$$k_{ij} = \cos\left(\frac{\pi}{2} + edge_slope\right).H_{ij} + \sin\left(\frac{\pi}{2} + edge_slope\right).V_{ij}$$

where $k_{ij}$ represents elements of the convolution kernel; $H_{ij}$ represents elements of the horizontal basis kernel; $V_{ij}$ represents elements of the vertical basis kernel; and the dot represents elementwise multiplication of the matrix.

A convolution operation 438 is then performed on digital image 420 using the combined convolution kernel represented by matrix 436. The convolution operation 438 can be expressed as:

$$g(x,y) = k * f(x,y) = \sum_{i=-a}^{a}\sum_{j=-b}^{b} k_{ij}.f(x+i, y+j)$$

where $g(x, y)$ represent the convolved image; $k$ is the combined convolution kernel; and $f(x,y)$ represents the original image. The elements of the convolution kernel are considered by the indices $i$ and $j$, that is: $-a \le i \le \alpha$ and $-b \le dy \le b$, where $\alpha$ and $b$ represent the size of the kernel as:

$$a = \frac{(kernel_height - 1)}{2} \quad \text{and} \quad b = \frac{(kernel_width - 1)}{2}.$$

The convolution operation 438 produces a set of resulting image pixels 440, as shown in Figure 4. After binarizing resulting image pixels 440, the desired edge gets demarcated by white pixels (value = 255) of thickness of 1-2 pixels. Both sides of the edge are set to black pixels (value = 0).

A similar convolution operation is then performed on the entire original image, as indicated at 440. A resulting image 442 is produced, with lines extracted, after the convolution operation. This can be followed by image morphology operations such as erosion and dilation. As shown in Figure 4, the desired edges can be distinguished in resulting image 442. Thereafter, an operation to extract and combine the lines from resulting image 442 is performed, as indicted at 444. This can be done using any common line detection/extraction method like Edge Drawing (ED) lines, Hough transform, or the like.

A final image output 446, with all the desired edges and lines, is then produced by method 400. The lines can be used in post processing to get outputs like ego position, relative position, and other geospatial estimates.

As mentioned above, Figure 6 is a flow diagram of an exemplary method 600 of using image frame transforms to produce the estimated slope of an expected edge feature, and an expected gradient direction. Although method 600 is described with respect to a heliport, it should be understood that this method is applicable to other vehicle landing areas.

Initially, a heliport LLA 610 is obtained from a navigation database 620, to provide heliport geodetic coordinates, and a vehicle LLA 612 is obtained from vehicle sensors 622, to provide vehicle geodetic coordinates. A conversion operation is performed at 614 to convert the geodetic coordinates to ECEF coordinates, which results in heliport ECEF coordinates 616 and vehicle ECEF coordinates 618. A conversion operation is then performed at 624 to convert the ECEF coordinates to vehicle relative NED coordinates, resulting in heliport coordinates in vehicle relative NED frame at 626.

Using a vehicle attitude 630 from vehicle sensors 622, a conversion operation is then performed at 632 to convert the relative NED frame to a vehicle body frame, resulting in heliport coordinates in vehicle body frame at 634. A conversion operation is then performed at 636 to convert the body frame relative to the camera frame, resulting in heliport coordinates in camera frame at 638.

Using a known camera intrinsic matrix from a database 640, a conversion operation is then performed at 642 to convert the camera frame to an image frame, resulting in heliport coordinates in pixels in an image frame at 644. Geometrical slope computations are then performed on the pixels in the image frame at 646, and an estimated slope of the expected edge is output at 648.

As shown in Figure 6, method 600 also uses information from a feature database 650, which provides information about various features in the heliport landing area. Such features include a feature's coarse shape, color information, gradient direction, and the like, as indicated at 652. These features are used to compute an expected gradient direction of the expected edge at 654.

Figures 7A-7C show the results of the present approach as applied in a simulation, for visual assisted landing of a vehicle on a helipad. Figure 7A depicts an original image 710 of the helipad captured by a vehicle camera. Figure 7B shows a processed image 720 based on original image 710, with the left edges of the helipad features extracted after application of a kernel. Figure 7C shows a processed image 730 based on original image 710, with the right edges of the helipad features extracted after application of the kernel.

Figures 8A-8F show the results of the present approach as applied in a simulation. In particular, Figure 8A depicts an original image 810 of an aircraft runway. Figure 8B shows an ROI and synthetic projection 820 overlaid on original image 810, which is detected using the navigation database, ownship position, and camera parameters. Figure 8C shows a processed image 830 of a right edge kernel based on the estimated slope (as per 648 in Fig. 6) of the runway edges from synthetic projection 820. Figure 8D depicts a processed image 840 with right edge extraction after application of the right edge kernel. Figure 8E shows an output image 850 with the combined edge detections, and Figure 8F depicts a trimmed final output image 860, which can be employed in various post processing navigation operations.

The processing units and/or other computational devices used in the method and system described herein may be implemented using software, firmware, hardware, or appropriate combinations thereof. The processing unit and/or other computational devices may be supplemented by, or incorporated in, specially-designed application-specific integrated circuits (ASICs) or field programmable gate arrays (FPGAs). In some implementations, the processing unit and/or other computational devices may communicate through an additional transceiver with other computing devices outside of the system, such as those associated with a management system or computing devices associated with other subsystems controlled by the management system. The processing unit and/or other computational devices can also include or function with software programs, firmware, or other computer readable instructions for carrying out various process tasks, calculations, and control functions used in the methods and systems described herein.

The methods described herein may be implemented by computer executable instructions, such as program modules or components, which are executed by at least one processor or processing unit. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer readable instructions. These instructions are typically stored on appropriate computer program products that include computer readable media used for storage of computer readable instructions or data structures. Such a computer readable medium may be available media that can be accessed by a general purpose or special purpose computer or processor, or any programmable logic device.

Suitable computer readable storage media may include, for example, non-volatile memory devices including semi-conductor memory devices such as Random Access Memory (RAM), Read Only Memory (ROM), Electrically Erasable Programmable ROM (EEPROM), or flash memory devices; magnetic disks such as internal hard disks or removable disks; optical storage devices such as compact discs (CDs), digital versatile discs (DVDs), Blu-ray discs; or any other media that can be used to carry or store desired program code in the form of computer executable instructions or data structures.

From the foregoing, it will be appreciated that, although specific embodiments have been described herein for purposes of illustration, various modifications may be made without deviating from the scope of the claims. Thus, the described embodiments are to be considered in all respects only as illustrative and not restrictive.

## Claims

**1.** A vision-based landing system, comprising:

at least one processor configured for being arranged onboard an aerial vehicle,
at least one vision sensor configured for being arranged onboard the aerial vehicle and operatively coupled to the at least one processor,
one or more aiding sensors configured to provide information about the geodetic coordinates and attitude of the aerial vehicle, the one or more aiding sensors being configured for being arranged onboard the aerial vehicle and operatively coupled to the at least one processor; and
a data storage unit in operative communication with the at least one processor;
wherein the at least one processor hosts an adaptive feature extraction module, which has processor readable instructions to perform a method to detect edges on a landing area for the aerial vehicle, the method comprising:

capturing at least one image of the landing area with the at least one vision sensor, wherein the landing area includes a plurality of edge features;
calculating an estimated slope of an expected edge feature of the landing area;
calculating an expected gradient direction of the expected edge feature;
selecting a horizontal basis kernel for the expected edge feature along an expected horizontal gradient;
selecting a vertical basis kernel for the expected edge feature along an expected vertical gradient;
calculating a combined convolution kernel for the expected edge feature based on the horizontal and vertical basis kernels, the estimated slope of the expected edge feature, and the expected gradient direction of the expected edge feature; and
performing a convolution operation on the at least one image using the combined convolution kernel to obtain a resulting edge feature image of the landing area,
wherein the data storage unit includes a navigation database and a landing area feature database and the navigation database is configured to provide information about the landing area, including a position, orientation and dimensions of the landing area,
**characterised in that** the navigation database is additionally configured to provide information about marking features of the landing area and **in that** the information from the navigation database and the one or more aiding sensors is used to calculate the estimated slope of the expected edge feature.

**2.** The system of claim 1, wherein the aerial vehicle comprises a fixed wing airplane, a helicopter, a vertical take-off and landing (VTOL) vehicle, an unmanned aerial vehicle (UAV), an unmanned aircraft systems (UAS) vehicle, or an urban air mobility (UAM) vehicle.

3. The system of claim 1, wherein the one or more aiding sensors comprise inertial sensors to provide information about a state of the aerial vehicle.

4. The system of claim 1, wherein information from the navigation database and the landing area feature database can be relayed to the aerial vehicle via a communication link.

5. The system of claim 1, wherein the landing area feature database is configured to provide information about the edge features in the landing area, including coarse shape, color, and gradient direction.

6. The system of claim 5, wherein the information from the landing area feature database is used to calculate the expected gradient direction of the expected edge feature.

**Patentansprüche**

1. Visionsbasiertes Landesystem, umfassend:

mindestens einen Prozessor, der dazu konfiguriert ist, an Bord eines Luftfahrzeugs angeordnet zu sein,
mindestens einen Visionssensor, der dazu konfiguriert ist, an Bord eines Luftfahrzeugs angeordnet und betriebsfähig mit dem mindestens einen Prozessor gekoppelt zu sein,
einen oder mehrere Hilfssensoren, die dazu konfiguriert sind, Informationen über die geodätischen Koordinaten und die Lage des Luftfahrzeugs bereitzustellen, wobei der eine oder die mehreren Hilfssensoren dazu konfiguriert sind, an Bord des Luftfahrzeugs angeordnet und betriebsfähig mit dem mindestens einen Prozessor gekoppelt zu sein; und
eine Datenspeichereinheit in betriebsfähiger Kommunikation mit dem mindestens einen Prozessor;
wobei der mindestens eine Prozessor ein adaptives Merkmalextraktionsmodul hostet, das prozessorlesbare Anweisungen aufweist, um ein Verfahren dazu durchzuführen, Ränder eines Landebereichs für das Luftfahrzeug zu erkennen, das Verfahren umfassend:

Erfassen von mindestens einem Bild des Landebereichs mit dem mindestens einen Visionssensor, wobei der Landebereich eine Vielzahl von Randmerkmalen beinhaltet;
Berechnen einer geschätzten Neigung eines erwarteten Randmerkmals des Landebereichs;
Berechnen einer erwarteten Gradientenrichtung des erwarteten Randmerkmals;
Auswählen eines horizontalen Basiskernels für das erwartete Randmerkmal entlang eines erwarteten horizontalen Gradienten;
Auswählen eines vertikalen Basiskernels für das erwartete Randmerkmal entlang eines erwarteten vertikalen Gradienten;
Berechnen eines kombinierten Konvolutionskernels für das erwartete Randmerkmal auf Basis des horizontalen und des vertikalen Basiskernels, der geschätzten Neigung des erwarteten Randmerkmals und der erwarteten Gradientenrichtung des erwarteten Randmerkmals; und
Durchführen eines Konvolutionsvorgangs an dem mindestens einen Bild unter Verwendung des kombinierten Konvolutionskernels, um ein resultierendes Randmerkmalbild des Landebereichs zu erhalten,

wobei die Datenspeichereinheit eine Navigationsdatenbank und eine Landebereichsmerkmaldatenbank beinhaltet, und die Navigationsdatenbank dazu konfiguriert ist, Informationen über den Landebereich bereitzustellen, die eine Position, Ausrichtung und Abmessungen des Landebereichs beinhalten,
**gekennzeichnet dadurch, dass** die Navigationsdatenbank zusätzlich dazu konfiguriert ist, Informationen über Markierungsmerkmale des Landebereichs bereitzustellen und dadurch, dass die Informationen von der Navigationsdatenbank und dem einen oder den mehreren Hilfssensoren dazu verwendet werden, die geschätzte Neigung des erwarteten Randmerkmals zu berechnen.

2. System nach Anspruch 1, wobei das Luftfahrzeug ein Starrflügelflugzeug, einen Hubschrauber, ein vertikal startendes und landendes (VTOL) Fahrzeug, ein unbemanntes Luftfahrzeug (UAV), ein unbemanntes Flugzeugsystem-(UAS-) Fahrzeug oder ein Fahrzeug der urbanen Luftmobilität (UAM) umfasst.

3. System nach Anspruch 1, wobei der eine oder die mehreren Hilfssensoren inertiale Sensoren umfassen, um Informationen über einen Zustand des Luftfahrzeugs bereitzustellen.

4. System nach Anspruch 1, wobei Informationen von der Navigationsdatenbank und der Landebereichsmerkmaldatenbank über eine Kommunikationsverbindung an das Luftfahrzeug weitergegeben werden können.

5. System nach Anspruch 1, wobei die Landebereichsmerkmaldatenbank dazu konfiguriert ist, Informationen über die Randmerkmale in dem Landebereich bereitzustellen, die eine grobe Form, eine Farbe und eine Gradientenrichtung beinhalten.

6. System nach Anspruch 5, wobei die Informationen von der Landebereichsmerkmaldatenbank verwendet werden, um die erwartete Gradientenrichtung des erwarteten Randmerkmals zu berechnen.

## Revendications

1. Système d'atterrissage basé sur la vision, comprenant :

au moins un processeur configuré pour être agencé à bord d'un véhicule aérien,
au moins un capteur de vision configuré pour être agencé à bord du véhicule aérien et couplé de manière opérationnelle à l'au moins un processeur,
un ou plusieurs capteurs d'aide configurés pour fournir des informations sur les coordonnées géodésiques et l'attitude du véhicule aérien, les un ou plusieurs capteurs d'aide étant configurés pour être agencés à bord du véhicule aérien et couplés de manière opérationnelle à l'au moins un processeur ; et
une unité de stockage de données en communication opérationnelle avec l'au moins un processeur ;
dans lequel l'au moins un processeur héberge un module d'extraction de caractéristiques adaptatives, qui présente des instructions lisibles par processeur pour réaliser un procédé de détection de bords sur une zone d'atterrissage pour le véhicule aérien, le procédé comprenant :

la capture d'au moins une image de la zone d'atterrissage avec l'au moins un capteur de vision, dans lequel la zone d'atterrissage inclut une pluralité de caractéristiques de bord ;
le calcul d'une pente estimée d'une caractéristique de bord attendue de la zone d'atterrissage ;
le calcul d'une direction de gradient attendue de la caractéristique de bord attendue ;
la sélection d'un noyau de base horizontal pour la caractéristique de bord attendue le long d'un gradient horizontal attendu ;
la sélection d'un noyau de base vertical pour la caractéristique de bord attendue le long d'un gradient vertical attendu ;
le calcul d'un noyau de convolution combiné pour la caractéristique de bord attendue sur la base des noyaux de base horizontal et vertical, de la pente estimée de la caractéristique de bord attendue et de la direction de gradient attendue de la caractéristique de bord attendue ; et
la réalisation d'une opération de convolution sur l'au moins une image en utilisant le noyau de convolution combiné pour obtenir une image de caractéristique de bord résultante de la zone d'atterrissage,

dans lequel l'unité de stockage de données inclut une base de données de navigation et une base de données de caractéristiques de zone d'atterrissage et la base de données de navigation est configurée pour fournir des informations sur la zone d'atterrissage, y compris une position, une orientation et des dimensions de la zone d'atterrissage,
**caractérisé en ce que** la base de données de navigation est en outre configurée pour fournir des informations sur les caractéristiques de marquage de la zone d'atterrissage et **en ce que** les informations provenant de la base de données de navigation et des un ou plusieurs capteurs d'aide sont utilisées pour calculer la pente estimée de la caractéristique de bord attendue.

2. Système selon la revendication 1, dans lequel le véhicule aérien comprend un avion à voilure fixe, un hélicoptère, un véhicule à décollage et atterrissage verticaux (VTOL), un véhicule aérien sans pilote (UAV), un véhicule à systèmes d'aéronefs sans pilote (UAS) ou un véhicule de mobilité aérienne urbaine (UAM).

3. Système selon la revendication 1, dans lequel les un ou plusieurs capteurs d'assistance comprennent des capteurs inertiels pour fournir des informations sur un état du véhicule aérien.

4. Système selon la revendication 1, dans lequel les informations provenant de la base de données de navigation et de la base de données de caractéristiques de zone d'atterrissage peuvent être relayées au véhicule aérien via une liaison de communication.

5. Système selon la revendication 1, dans lequel la base de données de caractéristiques de zone d’atterrissage est configurée pour fournir des informations sur les caractéristiques de bord dans la zone d’atterrissage, y compris la forme grossière, la couleur et la direction de gradient.

6. Système selon la revendication 5, dans lequel les informations provenant de la base de données de caractéristiques de zone d’atterrissage sont utilisées pour calculer la direction de gradient attendue de la caractéristique de bord attendue.

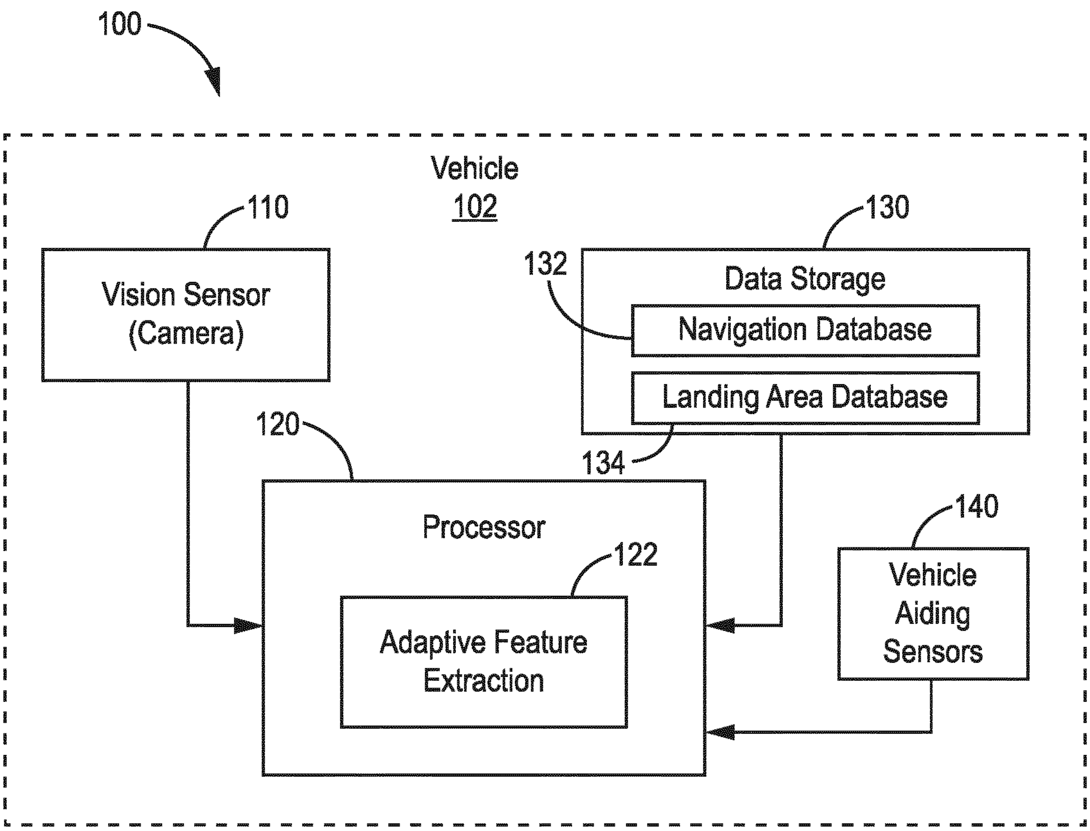
100
Vehicle
102
110
Vision Sensor
(Camera)
130
132
Data Storage
Navigation Database
Landing Area Database
134
120
Processor
122
Adaptive Feature
Extraction
140
Vehicle
Aiding
Sensors

FIG. 1A

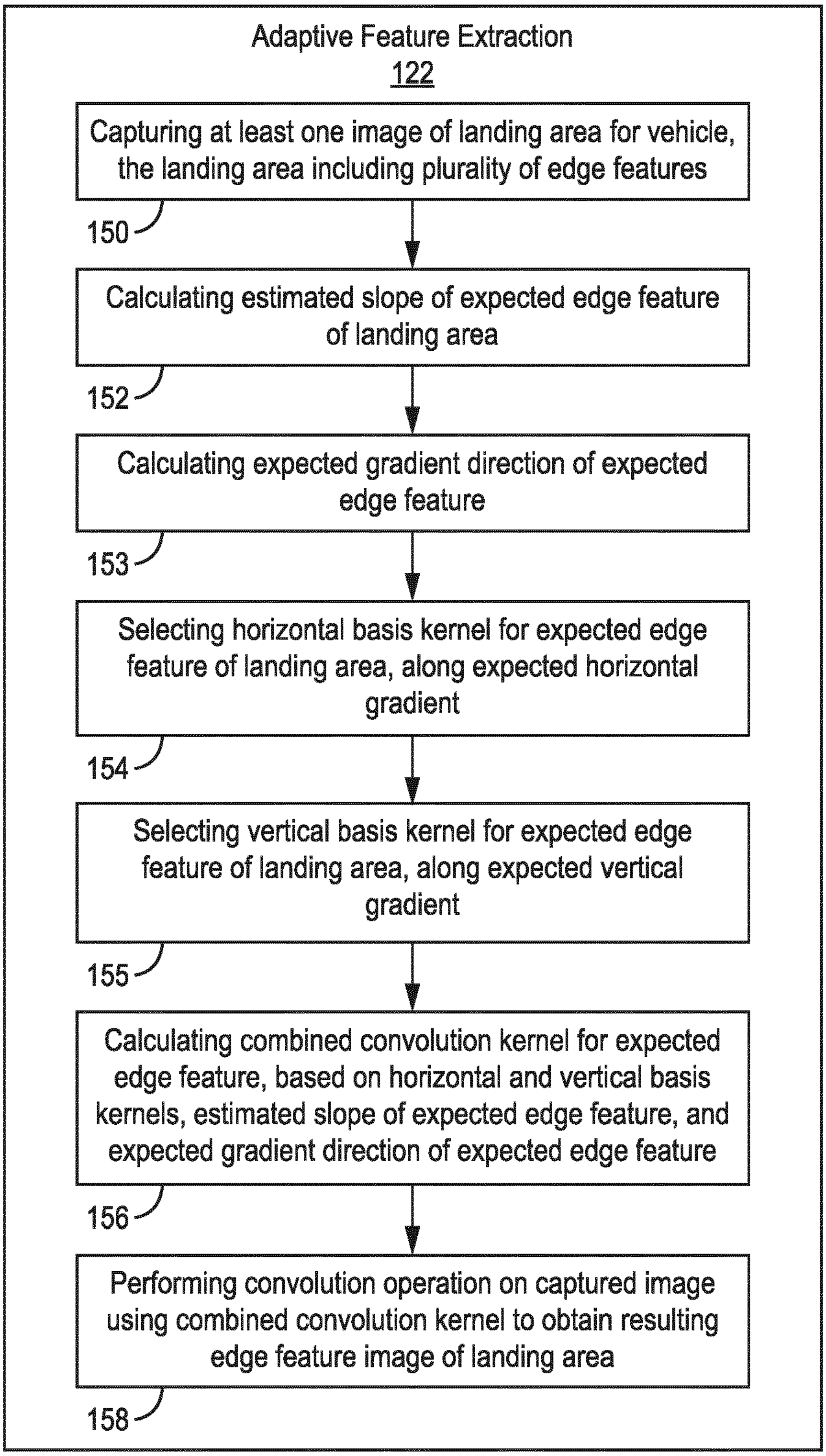
Adaptive Feature Extraction
122
Capturing at least one image of landing area for vehicle, the landing area including plurality of edge features
150
Calculating estimated slope of expected edge feature of landing area
152
Calculating expected gradient direction of expected edge feature
153
Selecting horizontal basis kernel for expected edge feature of landing area, along expected horizontal gradient
154
Selecting vertical basis kernel for expected edge feature of landing area, along expected vertical gradient
155
Calculating combined convolution kernel for expected edge feature, based on horizontal and vertical basis kernels, estimated slope of expected edge feature, and expected gradient direction of expected edge feature
156
Performing convolution operation on captured image using combined convolution kernel to obtain resulting edge feature image of landing area
158

FIG. 1B

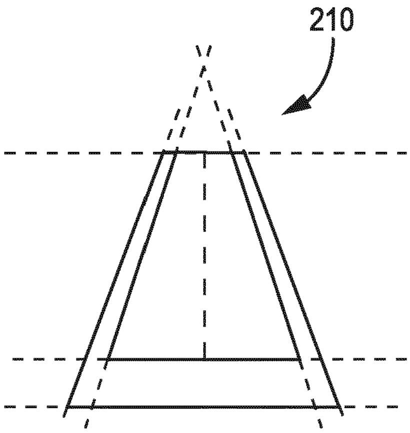


FIG. 2A

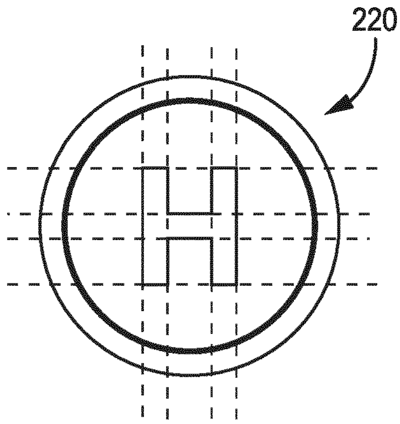


FIG. 2B

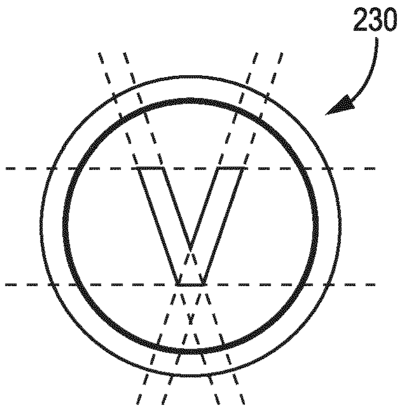


FIG. 2C

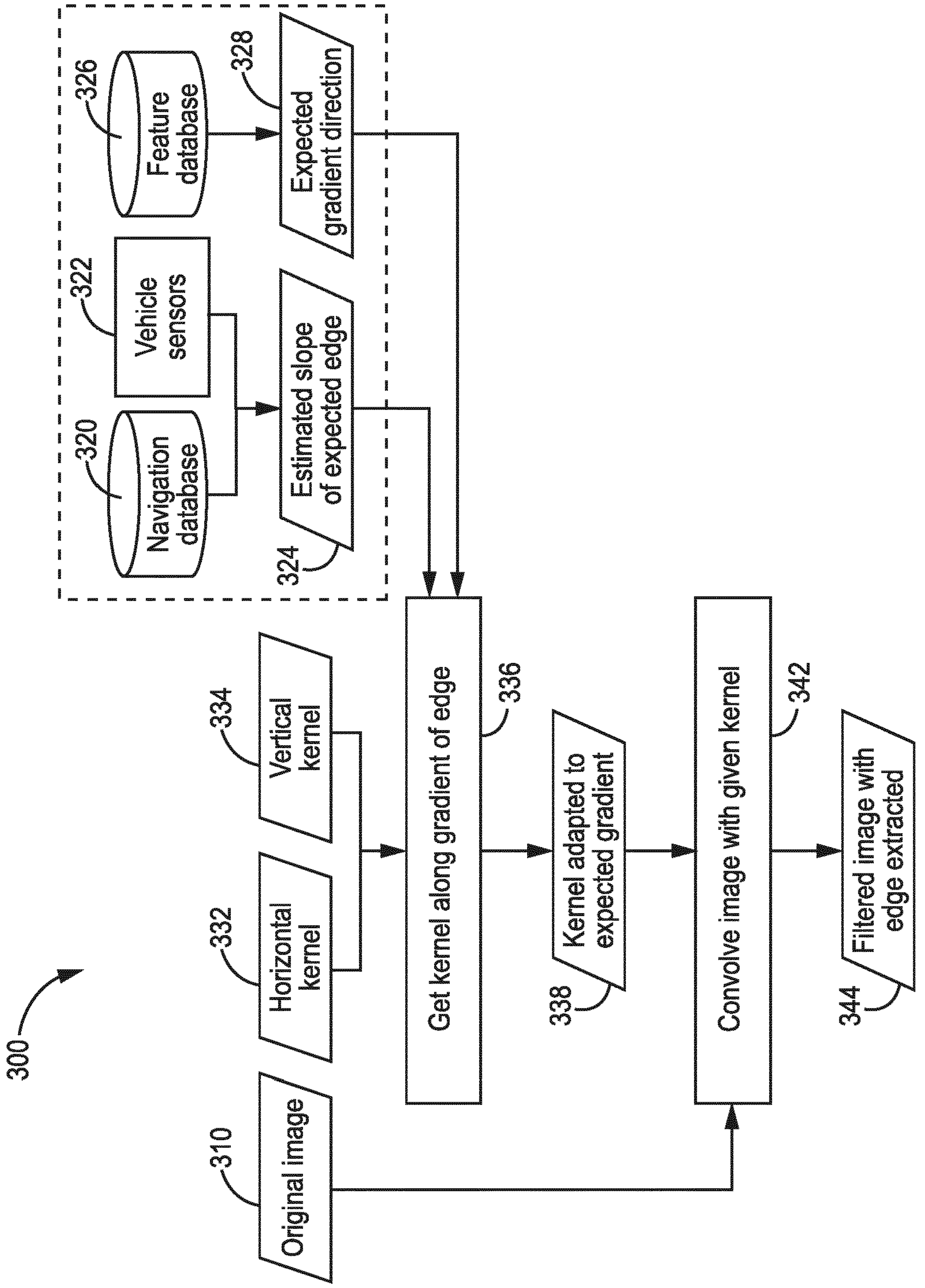
300
Original image
310
Horizontal kernel
332
Vertical kernel
334
Navigation database
320
Vehicle sensors
322
Feature database
326
Estimated slope of expected edge
324
Expected gradient direction
328
Get kernel along gradient of edge
336
Kernel adapted to expected gradient
338
Convolve image with given kernel
342
Filtered image with edge extracted
344

FIG. 3

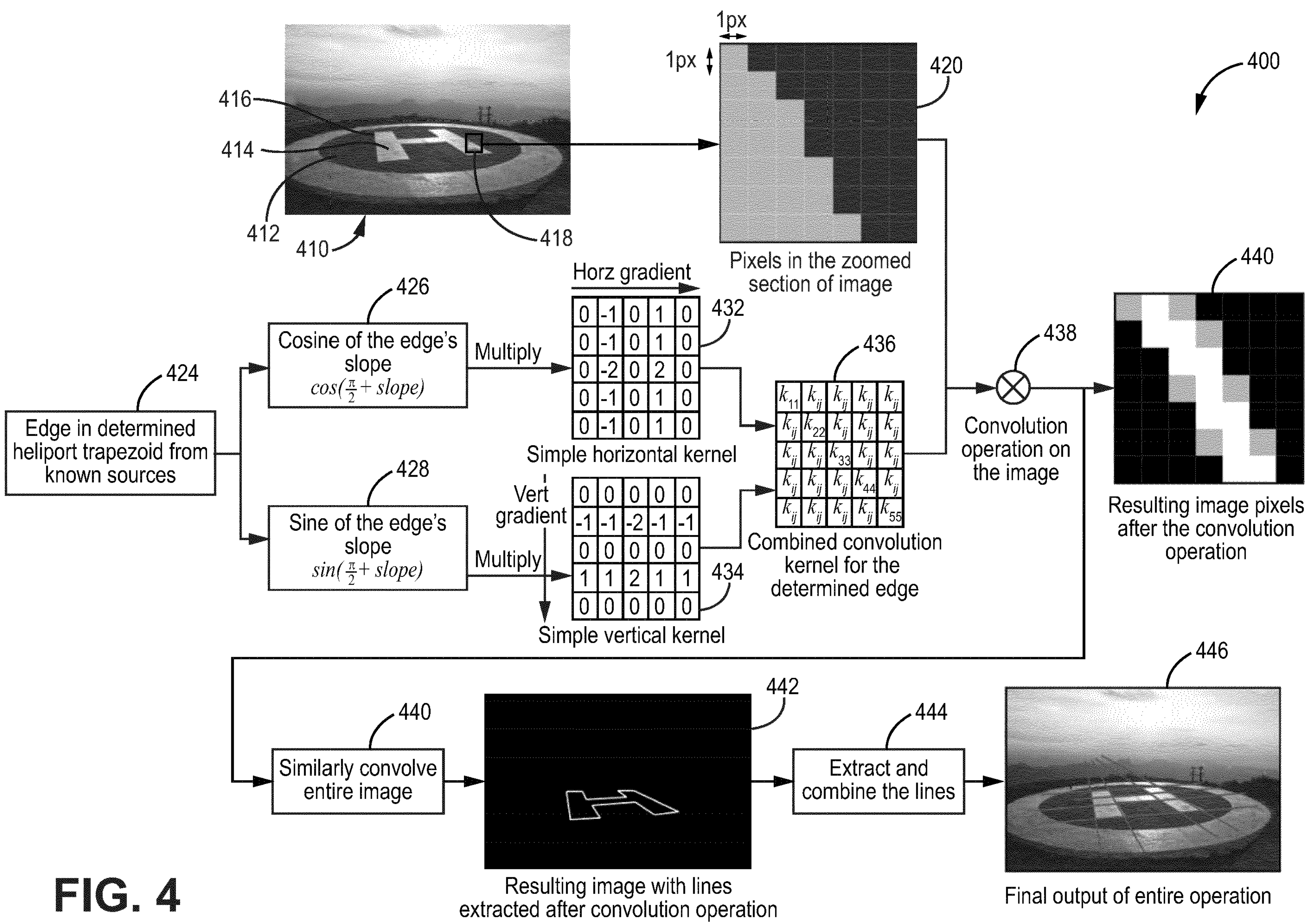
400
410
412
414
416
418
1px
1px
420
Pixels in the zoomed section of image
424
Edge in determined heliport trapezoid from known sources
426
Cosine of the edge's slope
$cos(\frac{\pi}{2} + slope)$
428
Sine of the edge's slope
$sin(\frac{\pi}{2} + slope)$
Multiply
Multiply
Horz gradient
0 -1 0 1 0
0 -1 0 1 0
0 -2 0 2 0
0 -1 0 1 0
0 -1 0 1 0
432
Simple horizontal kernel
Vert gradient
0 0 0 0 0
-1 -1 -2 -1 -1
0 0 0 0 0
1 1 2 1 1
0 0 0 0 0
434
Simple vertical kernel
436
$k_{11}$ $k_{ij}$ $k_{ij}$ $k_{ij}$ $k_{ij}$
$k_{ij}$ $k_{22}$ $k_{ij}$ $k_{ij}$ $k_{ij}$
$k_{ij}$ $k_{ij}$ $k_{33}$ $k_{ij}$ $k_{ij}$
$k_{ij}$ $k_{ij}$ $k_{ij}$ $k_{44}$ $k_{ij}$
$k_{ij}$ $k_{ij}$ $k_{ij}$ $k_{ij}$ $k_{55}$
Combined convolution kernel for the determined edge
438
Convolution operation on the image
440
Resulting image pixels after the convolution operation
440
Similarly convolve entire image
442
Resulting image with lines extracted after convolution operation
444
Extract and combine the lines
446
Final output of entire operation

FIG. 4

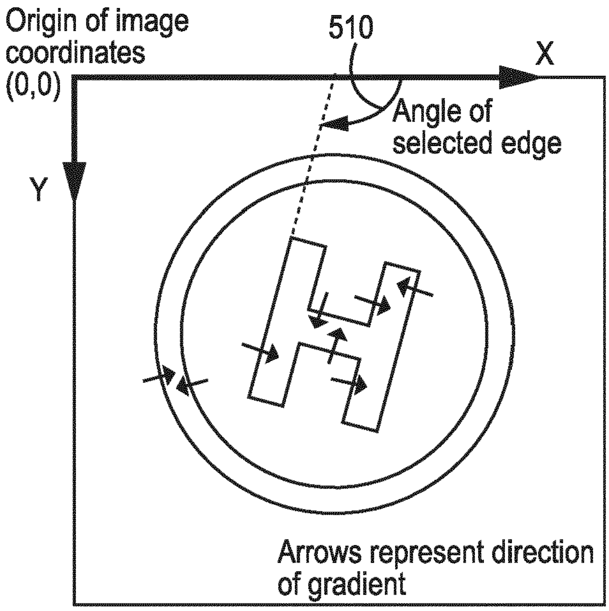
Origin of image coordinates (0,0)
510
X
Y
Angle of selected edge
Arrows represent direction of gradient

FIG. 5

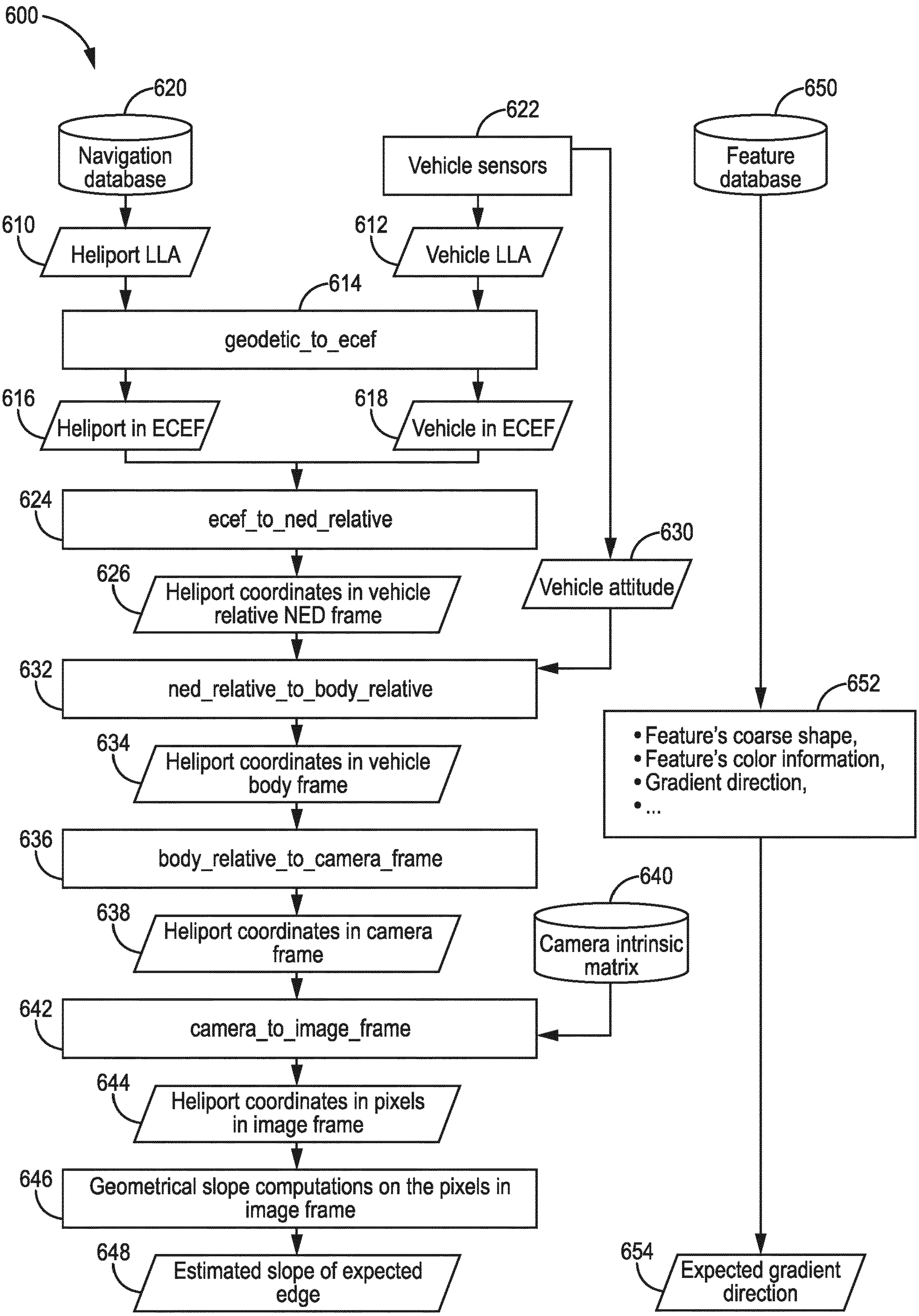
600
620
Navigation database
622
Vehicle sensors
650
Feature database
610
Heliport LLA
612
Vehicle LLA
614
geodetic_to_ecef
616
Heliport in ECEF
618
Vehicle in ECEF
624
ecef_to_ned_relative
630
Vehicle attitude
626
Heliport coordinates in vehicle relative NED frame
632
ned_relative_to_body_relative
652
• Feature's coarse shape,
• Feature's color information,
• Gradient direction,
• ...
634
Heliport coordinates in vehicle body frame
636
body_relative_to_camera_frame
640
Camera intrinsic matrix
638
Heliport coordinates in camera frame
642
camera_to_image_frame
644
Heliport coordinates in pixels in image frame
646
Geometrical slope computations on the pixels in image frame
648
Estimated slope of expected edge
654
Expected gradient direction

FIG. 6

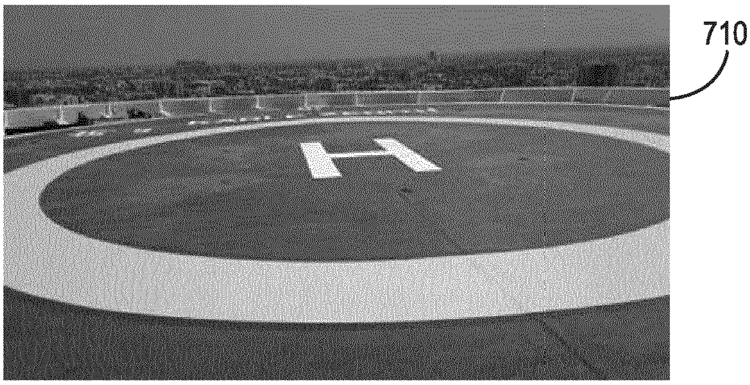


FIG. 7A

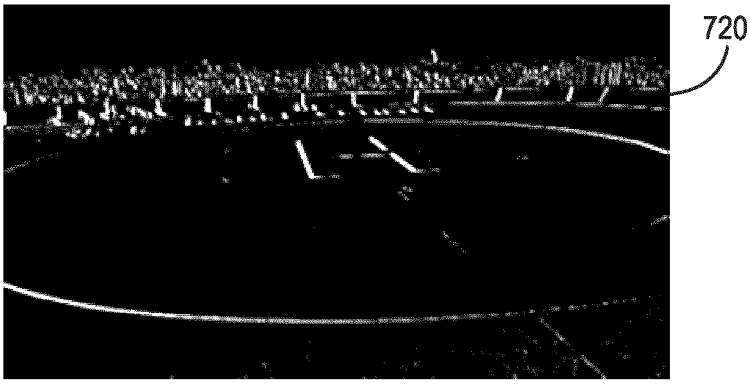


FIG. 7B

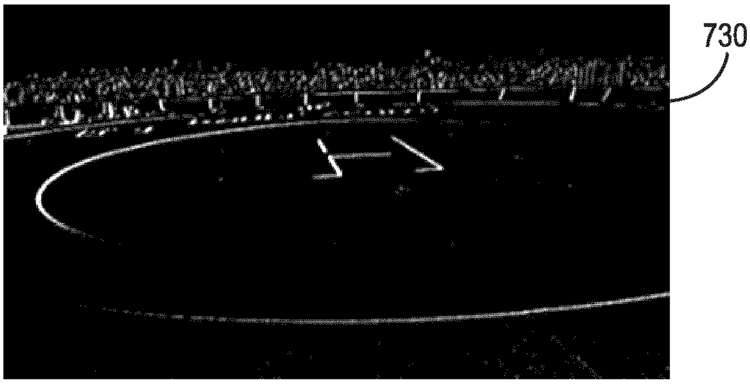


FIG. 7C

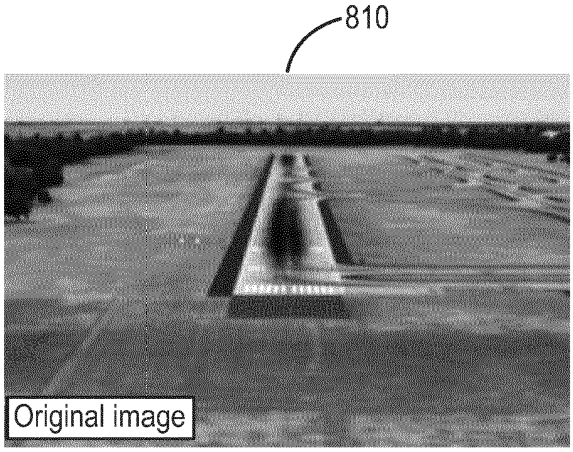


FIG. 8A

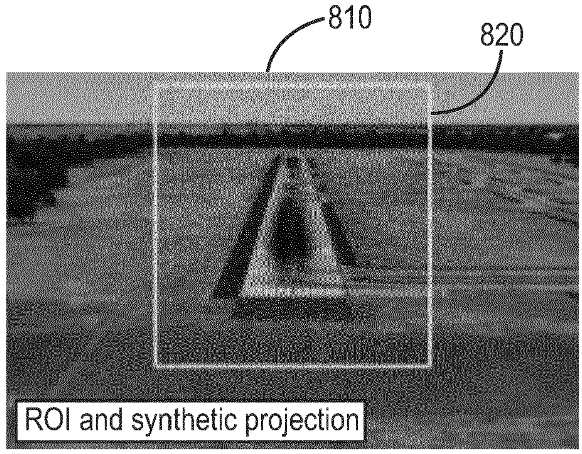


FIG. 8B

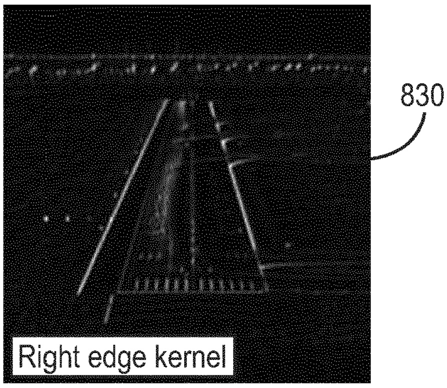


FIG. 8C

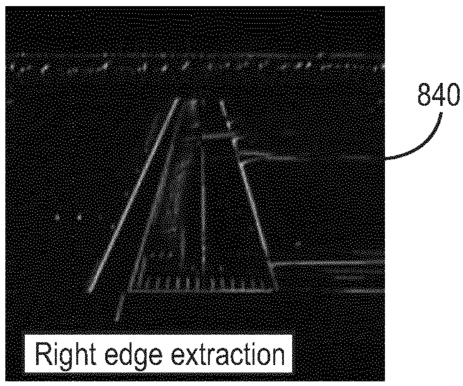


FIG. 8D

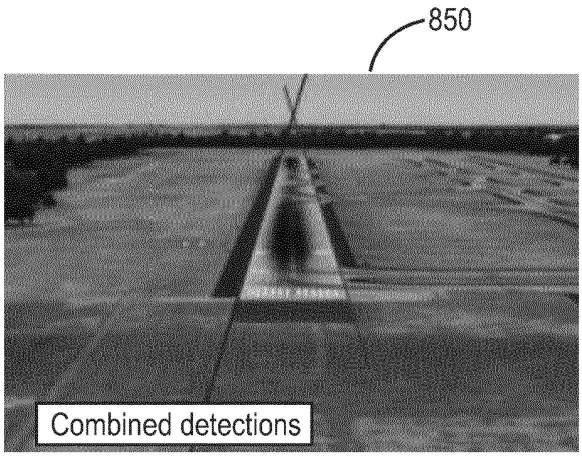


FIG. 8E

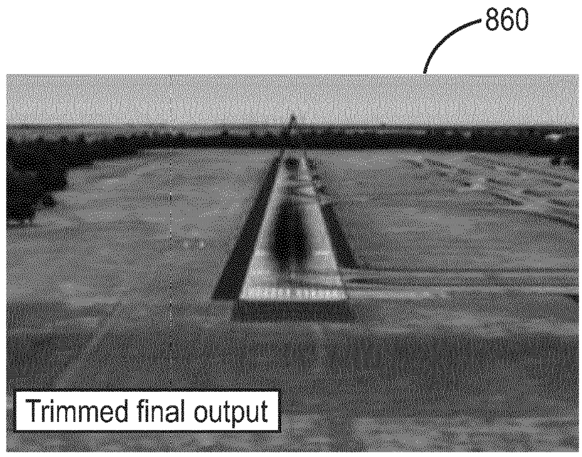


FIG. 8F

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- High Precision Approaches Enabled by an Optical-Based Navigation System. **ANGERMANN M et al.** PNT 2015- PROCEEDINGS OF THE ION 2015 PACIFIC PNT MEETING. THE INSTITUTE OF NAVIGATION, 23 April 2015, 694-701
- **LI JIAN et al.** Efficient Filtering for Edge Extraction under Perspective Effect. *APPLIED SCIENCES*, 15 September 2021, vol. 11 (18), 8558